·Europäisches Patentamt

**European Patent Office**

Office européen des brevets

(11) Publication number: **0 203 778**
**B1**

## (12) EUROPEAN PATENT SPECIFICATION

(45) Date of publication of patent specification: **04.10.89**

(51) Int. Cl.⁴: **B 60 T 8/32**

(21) Application number: **86303860.0**

(22) Date of filing: **21.05.86**

(54) Improvements in hydraulic braking systems for vehicles.

(30) Priority: **28.05.85 GB 8513294**

(43) Date of publication of application:
**03.12.86 Bulletin 86/49**

(45) Publication of the grant of the patent:
**04.10.89 Bulletin 89/40**

(84) Designated Contracting States:
**DE FR GB IT**

(73) Proprietor: **LUCAS INDUSTRIES public limited
company**
**Great King Street**
**Birmingham, B19 2XF West Midlands (GB)**

(72) Inventor: **Farr, Glyn Phillip Reginald**
**21 The Hamlet**
**Leek Wootton Warwickshire (GB)**

(74) Representative: **Spall, Christopher John et al**
**BARKER, BRETTELL & DUNCAN**
**138 Hagley Road**
**Edgbaston Birmingham B16 9PW (GB)**

(56) References cited:
EP-A-0 034 451
DE-A-1 580 684
DE-A-1 958 259
DE-A-3 109 372
GB-A-2 091 829
GB-A-2 113 333
GB-A-2 118 651

PATENT ABSTRACTS OF JAPAN, vol. 10, no.
18, (M-448)2075r, January 24, 1986-& JP-A-60
176 856 (SUZUKI JIDOSHA KOGYO K.K.) 10-09-
1985

Courier Press, Leamington Spa, England.

## Description

This invention relates to hydraulic braking systems for four wheel vehicles according to the precharacterizing part of Claim 1.

In some known braking systems of the kind set forth, for example as disclosed in GB—A—2 091 829, the supply consists of at least two separate sources of hydraulic fluid under pressure, suitably different pressure spaces of a tandem master cylinder, and each pressure space is connected to the actuators of different brakes, thereby defining independent braking circuits. Numerous layouts are known in which each front wheel brake is provided with two hydraulic actuators, and each rear wheel brake with a single actuator. In the layout disclosed in GB—A—2 091 829 corresponding actuators on brakes on opposite front wheels are connected in pairs, and each pair is connected to a different one of the two sources and to an actuator of one of the rear wheel brakes. Upon failure of one of the sources both front wheel brakes can still be operated by the two actuators which are sill operative together with one of the rear wheel brakes. Upon failure of one of the brake circuits there is a tendency for the one remaining rear wheel to lock before the front wheels since an equivalent brake-applying force is still applied to that rear wheel brake whereas the force applied to each front wheel is reduced substantially by one-half.

We are also aware of DE—A—1 958 259 in which each pressure space of a tandem master cylinder is connected to actuators on both front wheel brakes of a vehicle so that both brakes are adapted to be applied, irrespective of which pressure space is operative, and operation of one of the two actuators on each front wheel in turn actuates a respective power cylinder of which each power cylinder is adapted to operate both rear wheel brakes. Each circuit including each pressure space is therefore adapted to actuate both front wheel brakes directly, and both rear wheel brakes indirectly.

According to one aspect of our invention in an hydraulic braking system according to the pre-characterising part of claim 1, each front wheel brake is adapted to be applied by at least one actuator and each rear wheel brake is adapted to be applied by at least two actuators, the first circuit comprising the first source of brake-applying fluid, and a first connection between the first source and the actuator for one front wheel brake only, and between the first source and one of each of the two actuators for each of the two rear wheel brakes, and the second circuit comprising the second source of brake-applying fluid, and a second connection between the second source and the actuator for the other front wheel brake only, and between the second source the other of each of the two actuators for each of the two rear wheel brakes.

Upon failure of one of the brake-applying circuits, therefore, one front wheel brake is still operable together with both rear wheel brakes. Since the front wheel brake is still applied with a normal brake applying force there will be a tendency for this wheel to lock before either rear wheel, since the brake-applying force applied to each rear wheel is reduced substantially by one-half. This is seen as a considerable advantage since it is considered to be highly desirable for locking of a front wheel to occur before any tendency for a rear wheel to lock.

Such a layout has an additional advantage when adapted for use as an anti-skid hydraulic braking system.

To obtain the best stopping distances on any surface a four-wheel vehicle anti-skid system must have control over each wheel, so that should the surface below each wheel vary in friction, only the relevant wheel is corrected to prevent a skid. Unfortunately, such a system is expensive and requires at least four modulators and four sensors, operable independently, to control the relative behaviour of the four wheels. In addition, when the sensors are of the electronic type, signals from the sensors are supplied to a four channel electronic controller for operating the modulators. The four channel controller is also expensive as it requires an interface circuit to accept four inputs.

To reduce costs a common compromise is to have axle control at the rear of the vehicle so that only three modulators are required. However, the four sensors and a controller with four inputs is as expensive.

Another solution is to use an 'X' split system with front and rear wheel brakes interconnected diagonally. This requires two sensors, one on each front wheel, and two modulators. The controller (being two channel) is much cheaper, substantially 60% of the cost of a four channel controller.

All such cost reduced systems work well on surfaces with an even friction coefficient but a split μ surface with pairs of wheels on opposite sides of the vehicle running on areas of different coefficients of friction will show up the compromised systems adversely.

For example, if we take a split μ surface the system with four sensors and three modulators will select low for the whole of the rear axle and the rear wheel running on the area of higher friction will be underbraked.

Similarly the 'X' split system will reduce the pressure on the rear wheel running on the area of high μ and skid the rear wheel running on the area of low μ.

A split between brakes on wheels on opposite sides of a vehicle would give a good performance on a split μ surface but would be almost uncontrollable in the one system failed case since all the brake torque would then be applied to one side only of the vehicle.

In accordance with another aspect of our invention in an hydraulic braking system according to the said one aspect of our invention we incorporate into each brake-applying circuit a modulator for modulating the pressure applied from the source of that circuit to the actuators of that circuit in combination with skid sensing means for controlling operation of the modulator in accordance with the behaviour of the front wheel of the vehicle with which that brake-applying circuit is associated.

Thus we provide a system having two modulators and two sensors, which gives a reasonable braking performance on a split μ surface.

Because of the layout of the two circuits the use of a single modulator enables us to modulate at the same time the pressure applied to one front wheel brake and substantially one-half of the pressure applied to both rear wheel brakes.

The skid sensing means may comprise a mechanical sensor, suitably a flywheel mechanism associated with a respective front wheel. Alternatively it may comprise an electronic speed sensor associated with a respective front wheel, with a two channel electronic controller common to both circuits for operating the two modulators in accordance with signals from the sensors.

If such a system is operated on a split μ surface the wheels on the higher μ side will be braked with a front wheel brake applied with a normal braking force and a rear wheel brake of which the brake force is reduced by up to substantially 50%, and the wheels on the lower μ side will be braked with a front wheel brake at a substantially reduced braking force plus a skidding rear wheel. In such a situation the revolving wheel on the higher μ side will keep the vehicle stable.

The relative proportions of the brake-applying forces from the actuator which determine the net torque for the rear wheel brakes may be chosen in accordance with whether a failure of a brake circuit, or whether anti-skid performance, is the dominant consideration. It is quite possible to give priority to the half failed braking case, that is to say failure of one of the two circuits, by arranging for the rear actuator which is coupled to the diagonally opposite front wheel brake actuator to provide a greater proportion of the brake-applying force for the rear wheel brake than that which is provided by the other actuator of that brake which is incorporated into the other braking circuit. Conversely, should priority for anti-skid performance be required, then the said diagonally opposite rear wheel brake actuator will be arranged to provide a smaller proportion of the brake-applying force than that which is provided by the said other actuator of that brake.

Two embodiments of our invention are illustrated in the accompanying drawings in which:—

*Figure 1* is a layout of an hydraulic braking system for vehicle;

*Figure 2* is a layout of an electronic control circuit for the braking system of Figure 1;

*Figure 3* is a layout of a system similar to Figure 1 but showing some modifications; and

*Figure 4* is a graph showing the behaviour of the system of Figure 3 with the torque applied to the rear wheels being plotted against brake pressure or torque applied to the front wheels.

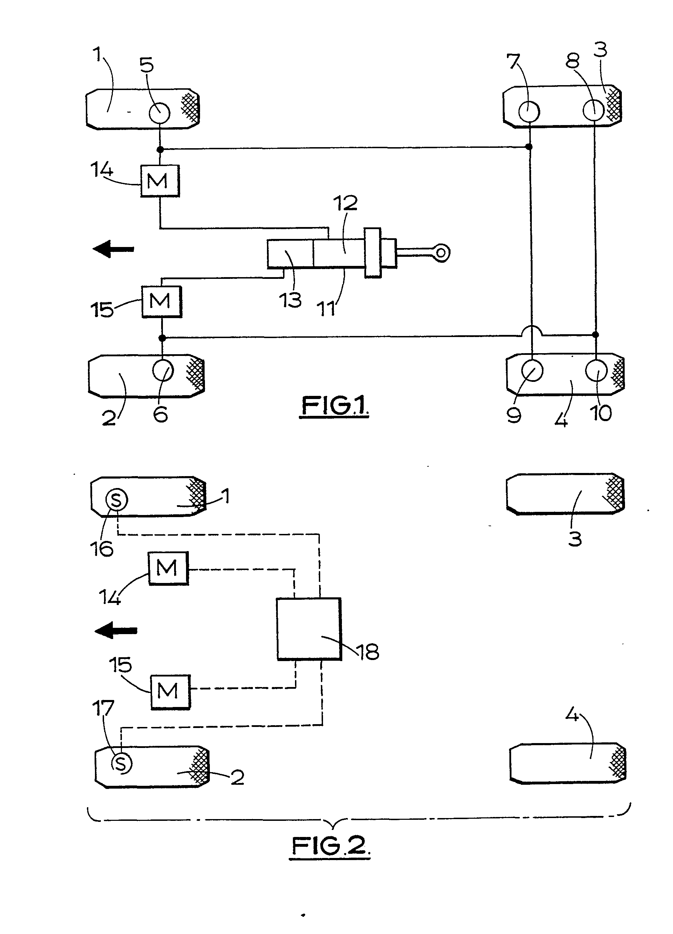

The braking system shown in the layout of Figure 1 comprises two separate brake-applying circuits for a vehicle having two front wheels 1, 2 and two rear wheels 3, 4. As illustrated a brake on the wheel 1 is adapted to be applied by a single hydraulic actuator 5, and a brake on the wheel 2 by a single hydraulic actuator 6. A brake on the wheel 3 is adapted to be applied by two hydraulic actuators 7 and 8, and a brake on the wheel 4 by two hydraulic actuators 9 and 10. The relative sizes of the actuators 7 and 8, and the actuators 9 and 10 are chosen to ensure that, for a given braking pressure, substantially the same brake torque is developed when a brake on a rear wheel is applied by either the actuator 7 or the actuator 8, or by the actuator 9 or the actuator 10, respectively.

A pedal-operated master cylinder 11 has two pressure spaces 12, 13. The pressure space 12 is connected through pipe-lines to the actuators 5, 7 and 9, to define a first brake-applying circuit, and the pressure space 13 is connected through pipe-lines to the actuators 6, 10 and 8, to define a second brake-applying circuit.

When the master cylinder 11 is operated normally, the brakes on all four wheels 1, 2, 3 and 4 are applied by all six actuators 5, 6, 7 and 8 and 9 and 10 respectively.

Upon failure of one of the brake-applying circuits, say the second circuit which includes the pressure space 13, the actuators 6, 10 and 8 are inoperative, causing failure of the brake on the wheel 2, and the force applied to the brakes on the rear wheels 3 and 4 to be reduced substantially by one half. Provided the first circuit remains operative, the brake on the front wheel 1 will be applied together with the brakes on both rear wheels 3 and 4, but with these brakes applied with a reduced force to produce a reduced braking effort. This ensures that locking of the front wheel 1 will occur before there is any tendency for the rear wheels 3 and 4 to lock.

To convert the system into an anti-skid hydraulic braking system a first modulator 14 is located between the pressure space 12 and the actuator 5, with the actuators 7 and 9 connected to the pipe-line between the modulator 14 and the actuator 5. A second modulator 15 is located between the pressure space 13 and the actuator 6, with the actuators 10 and 8 connected to the pipe-line between the modulator 15 and the actuator 6.

The operation of each modulator 14 and 15 is controlled in accordance with the behaviour of each respective front wheel 1 and 2 by skid sensing means.

The skid sensing means may comprise a mechanical sensor, suitably a flywheel mechanism of known type.

Alternatively, as illustrated in Figure 2 of the drawings, the skid sensing comprises an electronic sensor 16 responsive to the behaviour of the wheel 1 and an electronic sensor 17 responsive to the behaviour of the wheel 2. Skid signals emitted by the sensors 16 and 17 are supplied to a two channel electronic controller 18.

Depending upon which sensor emits a skid signal the controller 18 is arranged to operate either or both modulators 14 and 15 in order to relieve the pressure from the master cylinder 11 applied to the respective actuators.

Assuming, for example, that only the sensor 17 emits a skid signal, indicating that the vehicle is travelling over a split μ surface, then the modulator 15 is operated by the controller 18 in order to relieve the pressure from the master cylinder 11 applied to the actuators 6, 10 and 8. This relieves the braking effort applied to the front wheel 2, reduces substantially the braking effort applied to the brakes of both rear wheels 3 and 4, but the effort applied to the front wheel 1 remains the same. It follows that the front wheels 1 and 2, and the rear wheel 3 will continue to revolve, but that the rear wheel 4 will tend to skid. In such a situation the revolving rear wheel 3 running on the higher μ area will keep the vehicle stable.

Thus, to summarise the position, when the system is operated to brake a vehicle on a split μ surface, the wheels running on the area of higher μ will be braked by a front wheel brake applied with a normal force and a rear wheel brake applied with one half of the normal force plus a reduced second half of the normal force, and the wheels running on the area of lower μ will be braked by a front wheel brake applied with a reduced force, and a skidding rear wheel.

We recommend that such a system is not used with vehicles having a substantial positive steering offset since the action of the unbalanced braking torque could lead to loss of steering control. Preferably the system would be used with a vehicle having a steering system of the negative or zero offset type.

We have calculated the retardation possible for a small front wheel drive car with a 70/30 front/rear braking effort split and running on a .8/.2 split μ surface and have compared the results with a 4 wheel control system having an assumed efficiency of 100%. We also include a comparison with the incorporation of an apportioning valve to compensate for transfer of weight when the brakes are applied. The results are:

| Type of system | Decel | Efficiency | Efficiency % With Apportioning valve 80% Efficient |
|---|---|---|---|
| 4 wheel control | .5 g | 100 | — |
| 3 channel (2 front + rear axle) | .41 g | 82 | — |
| 2 channel electronic controller — 'X' split | .40 g | 80 | 79 |
| System of present invention | .466 g | 89 | 86 |

We have also calculated that for a rear wheel drive car with a 60/40 front/rear braking effort split the figures are not significantly different from those given above.

As can be seen, the system described above, although considerably cheaper, is better on a split μ surface than the system with three modulators and four sensors with rear axle control.

The system of the invention has other advantages other than its anti-lock potential. For example, in the half system failed case described above and on a .8 μ surface, the active front wheel would lock at substantially .4 g vehicle deceleration but the rear wheels would not lock until the pressure in the brakes operating the rear wheels was twice that causing that active braked front wheel to lock. This would occur at a deceleration of about .55 g, when the reduced weight transfer is taken into account.

Although the system described above resembles a reverse 'L' split it does have completely different characteristics to that split. The normal 'L' split with two sensors on the front would require four modulators. In the front system failed case the active rear wheel would lock first.

When used herein the term "actuator" is to be interpreted as covering one or more hydraulic pistons working in cylinders but which are supplied with fluid from a common pressure space in an hydraulic master cylinder.

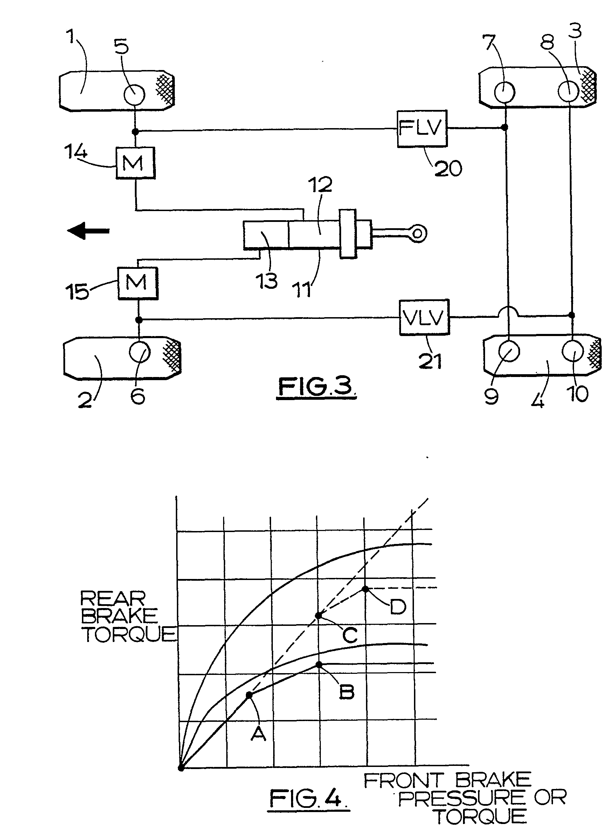

The braking system illustrated in the layout of Figure 3 is a modification of that shown in Figure 1 and corresponding reference numerals have been applied to corresponding parts.

In the braking system of Figure 3 pressure limiting valves 20 and 21 are incorporated in the two circuits being disposed in the pipe-lines leading to the two actuators 7 and 9, and 8 and 10, respectively. The pressure limiting valve 20 has a single rate setting, and the pressure limiting valve 21 comprises a load conscious limiting valve having a variable rate setting.

When the master cylinder is operated to apply the brakes, the torque applied to the brakes on the rear wheels 3, 4 can be increased in a first stage to a point A as shown in the graph of Figure 4 when further increase in pressure applied to the actuators 8 and 10 is prevented by the load conscious limiting valve 21.

Thereafter the pressure applied to the two actuators 7 and 9 can increase to a point B at which further increase is prevented by the pressure limiting valve 20. It will be noted that between points A and B the brake torque increases, but at a rate of torque increase less than that at which the torque increased to A.

When the vehicle is fully laden the setting of the load conscious valve 21 is increased. In such a case full rear brakes are applied until the fixed limiting valve 20 closes at C. The brake torque then increases at one-half the rate until the load conscious valve 21 closes at D. Thus the two valves 20, 21 having different settings for laden cases achieve a 3-stage characteristic.

Of course, if the variable setting of the valve 21 coincides with the fixed setting of the valve 20, then the characteristic is 2-stage.

The valves 20 and 21 are of known constructions.

In another arrangement the variable valve 21 may be of the deceleration conscious type which is adapted to close at a particular deceleration of the vehicle. Normally the valve 21 will close at a predetermined fixed value of deceleration, say at the point A on the graph when the vehicle is unladen, but the valve 21 will not close, when the vehicle is laden, until point D is reached.

Thus the fixed valve 20 always closes at the same front-wheel pressure i.e. B or C, and the variable valve 21 closes at a front-wheel pressure corresponding to point A when unladen or to point D when fully laden.

If drum brakes of the one-leading, one-trailing shoe type are fitted to the rear wheels, the variable valve 21 would control the two leading shoes of both brakes and the fixed valve 20 the two trailing shoes. Therefore, in the unladen case, the brake torque would rise less steeply after point A. In the fully laden case the brake torque would rise more steeply after point C.

However, when the vehicle is fully laden, the valve 21 remains open to provide a two-slope curve. Point D is therefore omitted and the pressure can continue to increase at a rate determined by the slope from C to D.

In the constructions described above with reference to Figures 3 and 4, the fixed limiting valves 20 may be pressure conscious adapted to close at a predetermined pressure, or deceleration conscious adapted to close at a predetermined value of deceleration.

Under skid conditions with the modulators 14 and 15 operative, the braking system illustrated in the layout of Figure 3 provides:

1. Individual control of both front wheels; and
2. Maintains the rear wheel brakes at the mean of the two front wheel brakes.

We therefore provide a system which is particularly good on split μ surfaces and approaches what can be achieved with a 3-channel anti-lock system, but without the expense of providing a 3-channel control and at least one further wheel speed sensor.

**Claims**

1. An hydraulic braking system for a four wheel vehicle having brakes on front wheels (1, 2) and rear wheels (3, 4), in which brakes on the wheels are actuated by hydraulic actuators (5, 6, 7, 8, 9, 10) all supplied with hydraulic pressure from a supply (11), and the supply consists of at least two separate sources (12, 13), each source being connected to actuators of different brakes to define first and second independent braking circuits, each wheel brake being adapted to be applied by at least one actuator (5, 6) characterized in that each rear wheel brake is adapted to be applied by at least two actuators (7, 8, 9, 10), the first circuit comprising the first source of brake-applying fluid (11), and a first connection between the first source and the actuator (5) for one front wheel brake only, and between the first source and one of each of the two actuators (7, 9) for each of the two rear wheel brakes, and the second circuit comprising the second source (13) of brake-applying fluid, and a second connection between the second source and the actuator (6) for the other front wheel brake only, and between the second source the other of each of the two actuators (8, 10) for each of the two rear wheel brakes.

2. A system according to claim 1, characterised in that a modulator (14, 15) is incorporated into each brake-applying circuit to modulate the pressure applied from the source (12, 13) of that circuit to the actuators (5, 7, 9; 6, 8, 10) of that circuit in combination with skid sensing means (16, 17) for controlling operation of the respective modulator in accordance with the behaviour of the front wheel of the vehicle with which that brake-applying circuit is associated.

3. A system according to claim 2, characterised in that each skid sensing means (16, 17) comprises a mechanical sensor.

4. A system according to claim 3, characterised in that the mechanical sensor comprises a flywheel mechanism associated with a respective front wheel (1, 2).

5. A system according to claim 2, characterised in that each skid sensing means (16, 17) comprises an electronic speed sensor associated with a respective front wheel, with a two channel electronic controller (18) common to both circuits for operating the two modulators (14, 15) in accordance with signals from the sensors.

6. A system according to any preceding claim, characterised in that a pressure limiting valve (20, 21) is disposed in each circuit between the source (12, 13) and the actuators (7, 9; 8, 10) on both rear wheels (3, 4), and the pressure limiting valves (20, 21) are at different settings.

7. A system according to claim 6, characterised in that the valve (20) is adapted to close at a predetermined fixed pressure, and the valve (21) is adapted to close at a variable pressure.

8. A system according to claim 6, characterised in that the valve (21) is of the deceleration conscious type.

9. A system according to claim 6, characterised in that the valve (21) is of the load-conscious type.

10. A system according to any of claims 6—9, characterised in that the valve (20) is of the pressure conscious type adapted to close at a predetermined pressure.

11. A system according to any of claims 6—9, characterised in that the valve (20) is of the deceleration conscious type.

**Patentansprüche**

1. Hydraulisches Bremmsystem für ein Vierrad-Fahrzeug mit Bremsen an den Vorderrädern (1, 2) und den Hinterrädern (3, 4), bei welchem Bremsen an den Rädern durch hydraulische Betätigungseinrichtungen (5, 6, 7, 8, 9, 10) betätigt werden, welche alle mit Hydraulikdruck von einer Versorgung (11) versorgt werden, wobei die Versorgung aus zumindest zwei separaten Quellen (12, 13) besteht, wobei jede Quelle mit den Betätigungseinrichtungen der unterschiedlichen Bremsen verbunden ist, um erste und zweite unabhängige Bremskreise zu bilden, wobei jede Radbremse durch zumindest eie Betätigungseinrichtung (5, 6) betätigbar ist, dadurch gekennzeichnet, daß jede Hinterradbremse durch zumindest zwei Betätigungseinrichtungen (7, 8, 9, 10) betätigbar ist, wobei der erste Kreis die erste Quelle der Bremsbetätigungsflüssigkeit (11) umfaßt, und eine erste Verbindung zwischen der ersten Quelle und der Betätigungseinrichtung (5) für nur eine Vorderradbremse, und zwischen der ersten Quelle und einer der beiden Betätigungseinrichtungen (7, 8) für jede der zwei Hinterradbremsen, und wobei der zweite Kreis die zweite Quelle (13) der Bremsbetätigungsflüssigkeit umfaßt, und eine zweite Verbindung zwischen der zweiten Quelle und der Betätigungseinrichtung (6) für nur die andere Vorderradbremse, und zwischen der zweiten Quelle die andere jeder der zwei Betätigungseinrichtungen (8, 10) für jede der beiden Hinterradbremsen.

2. System nach Anspruch 1, dadurch gekennzeichnet, daß ein Modulator (14, 15) in jeden Bremsbetätigungskreis aufgenommen ist, um den von der Quelle (12, 13) dieses Kreises auf die Betätigungseinrichtung (5, 7, 9; 6, 8, 10) dieses Kreises aufgebrachten Druck in Kombination mit einer Rutschmeßeinrichtung (16, 17) zur Steuerung der Betätigung des jeweiligen Modulators in Übereinstimmung mit den Verhalten der Vorderräder des Fahrzeuges, welchen dieser Bremsbetätigungskreis zugeordnet ist, zu modulieren.

3. System nach Anspruch 2, dadurch gekennzeichnet, daß jede Rutschmeßeinrichtung (16, 17) einen mechanischen Sensor umfaßt.

4. System nach Anspruch 3, dadurch gekennzeichnet, daß der mechanische Sensor einen Schwungradmechanismus umfaßt, welcher dem jeweiligen Vorderrad (1, 2); zugeordnet ist.

5. System nach Anspruch 2, dadurch gekennzeichnet, daß jede Rutschmeßeinrichtung (16, 17) einen elektronischen Geschwindigkeitssensor umfaßt, welcher einem jeweiligen Vorderrad zugeordnet ist, mit einer elektronischen Zweikanal-Steuereinrichtung (18), welche beiden Kreisen zur Betätigung der beiden Modulatoren (14, 15) in Abhängigkeit von den Signalen von den Sensoren gemeinsam zugeordnet ist.

6. System nach einem der vorhergehenden Ansprüche, dadurch gekennzeichnet, daß ein Druckbegrenzungsventil (20, 21) in jedem Kreis zwischen der Quelle (12, 13) und der Betätigungseinrichtung (7, 9; 8, 10) an beiden Hinterrädern (3, 4) angeordnet ist, und die Druckbegrenzungsventile (20, 21) unterschiedliche Einstellungen aufweisen.

7. System nach Anspruch 6, dadurch gekennzeichnet, daß das Ventil (20) dazu geeignet ist, bei einem vorbestimmten festen Druck zu schließen und daß das Ventil (21) dazu bestimmt ist, bei einem variablen Druck zu schließen.

8. System nach Anspruch 6, dadurch gekennzeichnet, daß das Ventil (21) in Form einer die Verzögerung realisierenden Bauart ausgebildet ist.

9. System nach Anspruch 6, dadurch gekennzeichnet, daß das Ventil (21) in Form einer die Belastung realisierenden Bauart ausgebildet ist.

10. System nach einem der Ansprüche 6 bis 9, dadurch gekennzeichnet, daß das Ventil (20) in Form einer den Druck realisierenden Bauart ausgebildet ist, welches geeignet ist, bei einem vorgegebenen Druck zu schließen.

11. System nach einem der Ansprüche 6 bis 9, dadurch gekennzeichnet, daß das Ventil (20) in Form einer die Verzögerung realisierenden Bauart ausgebildet ist.

**Revendications**

1. Un système hydraulique de freinage pour un véhicule à quatre roues comportant des freins sur les roues avant (1, 2) et les roues arrière (3, 4), dans lequel des freins sur les roues sont actionnés par des actionneurs hydrauliques (5, 6, 7, 8, 9, 10) qui reçoivent tous une pression hydraulique provenant d'une alimentation (11), et l'alimentation consiste au moins en deux sources séparées (12, 13), chaque source étant reliée à des actionneurs de différents freins pour définir un premier et un deuxième circuits indépendants de freinage, chaque frein de roue étant apte à être appliqué par au moins un actionneur (5, 6), caractérisé en ce que chaque frein de roue arrière est apte à être appliqué par au moins deux actionneurs (7, 8, 9, 10), le premier circuit comprenant la première source de fluide d'application de frein (11), et une première liaison entre la première source et l'actionneur (5) d'un seul frein de roue avant, et entre la première source et un seul des deux actionneurs (7, 9) respectifs de chacun des deux freins de roue arrière, et le deuxième circuit comprenant la deuxième source (13) de fluide d'apoplication de frein, et une deuxième liaison entre la deuxième source et l'actionneur (6) du frein de l'autre roue avant seulement, et entre la deuxième source et seulement l'autre des deux actionneurs (8, 10) de chacun des freins des deux roues arrière.

2. Un système selon la revendication 1, caractérisé en ce qu'un modulateur (14, 15) est incorporé dans chaque circuit d'application de frein pour moduler la pression appliquée par la source (12, 13) de ce circuit vers les actionneurs (5, 7, 9; 6, 8, 10) de ce circuit en combinaison avec des moyens de détection de dérapage pour commander la mise en oeuvre du modulateur respectif en fonction du comportement de la roue avant du véhicule à laquelle est associé ce circuit d'application de frein.

3. Un système selon la revendication 2, caractérisé en ce que chaque moyen (16, 17) de détection de dérapage comprend un détecteur mécanique.

4. Un système selon la revendication 3, caractérisé en ce que le détecteur mécanique comprend un mécanisme à roue volante associé à une roue avant respective (1, 2).

5. Un système selon la revendication 2, caractérisé en ce que chaque moyen (16, 17) de détection de dérapage comprend un détecteur électronique de vitesse associé à une roue avant respective, un dispositif électronique de réglage (18) à deux canaux étant commun aux deux circuits pour mettre en oeuvre les deux modulateurs (14, 15) selon les signaux provenant des détecteurs.

6. Un système selon une revendication précédente quelconque, caractérisé en ce qu'une valve de limitation de pression (20, 21) est disposée dans chaque circuit entre la source (12, 13) et les actionneurs (7, 9; 8, 10) sur les deux roues arrière (3, 4), et en ce que les valves de limitation de pression (20, 21) sont à des réglages différents.

7. Un systeme selon la revendication 6, caractérisé en ce que la valve (20) est apte à se fermer à une pression fixe déterminée, et la valve (21) est apte à se fermer à une pression variable.

8. Un system selon la revendication 6, caractérisé en ce que la valve (21) est du type sensible à la décélération.

9. Un system selon la revendication 6, caractérisé en ce que la valve (21) est du type sensible à la charge.

10. Un system selon l'une quelconque des revendications 6 à 9, caractérisé en ce que la valve (20) est du type sensible à la pression apte à se fermer à une pression prédéterminée.

11. Un système selon l'une quelconque des revendications 6 à 9, caractérisé en ce que la valve (20) est du type sensible à la décélération.

EP 0 203 778 B1

FIG.1.

FIG.2.

1

EP 0 203 778 B1

FIG.3.

FIG.4.

REAR BRAKE TORQUE

FRONT BRAKE PRESSURE OR TORQUE